# EUROPÄISCHE PATENTANMELDUNG

(11) **EP 2 749 801 A1**
(43) Veröffentlichungstag der Anmeldung: **02.07.2014**
(21) Anmeldenummer: 13197669.8
(22) Anmeldetag: 17.12.2013
(51) Int. Cl.: F16L 3/12, F16L 3/13

(54) **Befestigungsclip**

(30) Priorität: 27.12.2012 FR 1262817
(71) Anmelder: TRW Automotive Electronics & Components GmbH, 78315 Radolfzell (DE)
(72) Erfinder: Kujm, Michel, 67340 Ingwiller (FR); Jacotey, Jérémy, 78290 Croissy sur Seine (FR)
(74) Vertreter: Prinz & Partner

(57) **Zusammenfassung**

Bei einem Befestigungsclip (10) für zumindest eine Leitung (18), mit einem Rahmen (12), der einen Aufnahmeraum (14, 14a, 14b) für die Leitung (18) begrenzt, in den die Leitung (18) so eingebracht werden kann, dass der Rahmen (12) die Leitung (18) in Umfangsrichtung umschließt, wobei am Rahmen (12) eine Einschuböffnung (16, 16a, 16b) für die Leitung (18) vorgesehen ist, und mit zumindest einem am Rahmen (12) gelagerten Schwenkarm (22, 22a, 22b), der von einer Halteposition, in der die Leitung (18) im Aufnahmeraum (14, 14a, 14b) fixiert ist, in einer Schwenkrichtung (S) in eine Montageposition bewegt werden kann, in der die Leitung (18) durch die Einschuböffnung (16, 16a, 16b) in den Aufnahmeraum (14, 14a, 14b) eingebracht werden kann, ist ein Steg (24, 24a, 24b) vorgesehen, der mit einem ersten Ende am Schwenkarm (22, 22a, 22b) und mit einem zweiten Ende auf der Innenseite des Rahmens (12) angebracht ist, wobei der Steg (24, 24a, 24b) zumindest ein Gelenk (34, 34a, 34b) aufweist und in der Montageposition gefaltet ist.

## Beschreibung

Die Erfindung betrifft einen Befestigungsclip für zumindest eine Leitung, mit einem Rahmen, der einen Aufnahmeraum für die Leitung begrenzt, in den die Leitung so eingebracht werden kann, dass der Rahmen die Leitung in Umfangsrichtung umschließt, wobei am Rahmen eine Einschuböffnung für die Leitung vorgesehen ist, und mit zumindest einem am Rahmen gelagerten Schwenkarm, der von einer Halteposition, in der die Leitung im Aufnahmeraum fixiert ist, in einer Schwenkrichtung in eine Montageposition bewegt werden kann, in der die Leitung durch die Einschuböffnung in den Aufnahmeraum eingebracht werden kann.

Befestigungsclips dieser Art werden verwendet, um eine Leitung, beispielsweise ein Kabel, auf einfache Weise befestigen zu können. Die Leitung kann durch die Einschuböffnung einfach in den Rahmen des beispielsweise an einem Anbauteil vormontierten Befestigungsclips eingeschoben werden und in diesem hinter den Schwenkarmen verrasten, sodass eine einfache, werkzeuglose Befestigung der Leitung möglich ist.

Bei hohen Auszugskräften auf die Leitung kann es allerdings vorkommen, dass die Schwenkarme entgegen der Schwenkrichtung aus der Aufnahme bewegt werden, also nach außen umschlagen, sodass die Leitung nicht mehr in der Aufnahme gehalten ist.

Aufgabe der Erfindung ist es, einen Befestigungsclip bereitzustellen, der eine einfache Montage der Leitung ermöglicht, aber eine verbesserte Fixierung der Leitung bereitstellt.

Zur Lösung der Aufgabe ist ein Befestigungsclip für zumindest eine Leitung vorgesehen, mit einem Rahmen, der einen Aufnahmeraum für die Leitung begrenzt, in den die Leitung so eingebracht werden kann, dass der Rahmen die Leitung in Umfangsrichtung umschließt, wobei am Rahmen eine Einschuböffnung für die Leitung vorgesehen ist, und mit zumindest einem am Rahmen gelagerten Schwenkarm, der von einer Halteposition, in der die Leitung im Aufnahmeraum fixiert ist, in einer Schwenkrichtung in eine Montageposition bewegt werden kann, in der die Leitung durch die Einschuböffnung in den Aufnahmeraum eingebracht werden kann, wobei ein Steg vorgesehen ist, der mit einem ersten Ende am Schwenkarm und mit einem zweiten Ende auf der Innenseite des Rahmens angebracht ist, wobei der Steg zumindest ein Gelenk aufweist und in der Montageposition gefaltet ist. Der Steg ist so am Schwenkarm und am Rahmen befestigt, dass eine Bewegung aus der Halteposition entgegen der Schwenkrichtung nicht möglich ist. Bei einer solchen Bewegung wird der Steg gestreckt bzw. auf Zug belastet und hält somit den Schwenkarm zuverlässig in der Halteposition. Das im Steg vorgesehene Gelenk hat den Vorteil, dass der Steg beim Verschwenken des Schwenkarms in die Montageposition einfach zusammengefaltet werden kann, sodass der Steg beim Verschwenken des Schwenkarms in die Montageposition keinen Widerstand bereitstellt und zudem platzsparend gefaltet werden kann.

Erfindungsgemäß ist, insbesondere bei einem gattungsgemäßen Befestigungsclip, des Weiteren vorgesehen, dass am Schwenkarm und/oder am Rahmen ein Vorsprung vorgesehen sein kann, der beim Verschwenken des Schwenkarms aus der Halteposition entgegen der Schwenkrichtung an einer Anlagefläche am Rahmen und/oder am Schwenkarm in Anlage gelangt und ein Verschwenken des Schwenkarms entgegen der Schwenkrichtung blockiert. Dieser Vorsprung hat in Kombination mit der Anlagefläche die gleiche Wirkung wie ein erfindungsgemäßer Steg, nämlich dass ein Verschwenken des Schwenkarms entgegen der Schwenkrichtung aus dem Aufnahmeraum heraus verhindert wird. Der Vorsprung kann beispielsweise außerhalb des Aufnahmeraums bzw. auf der Außenseite des Rahmens angeordnet sein. Dies bietet den Vorteil, dass innerhalb des Rahmens keine zusätzlichen Bauteile vorhanden sind, wodurch der Aufnahmeraum vollständig für die Leitung genutzt werden kann.

Der Schwenkarm ist vorzugsweise an einem Rand der Einschuböffnung gelagert, sodass dieser in der Halteposition die Einschuböffnung verschließen oder zumindest die Breite der Einschuböffnung so weit reduzieren kann, dass ein Herausziehen der Leitung aus dem Aufnahmeraum nicht möglich ist.

Es ist auch möglich, dass zwei Schwenkarme vorgesehen sind, die an entgegengesetzten Rändern der Einschuböffnung vorgesehen sind und die in entgegengesetzte Richtungen in die Montageposition verschwenkt werden. Dadurch ist zum einen ein besserer Halt der Leitung möglich. Zum anderen kann die Einschuböffnung größer gestaltet werden, da diese durch beide Schwenkarme verschlossen werden kann, wodurch größere Leitungen in den Befestigungsclip eingeschoben werden können und der Befestigungsclip flexibler einsetzbar ist.

Der Steg ist vorzugsweise in der Halteposition gestreckt und wird bei einem weiteren Verschwenken des Schwenkarms aus dem Aufnahmeraum auf Zug belastet, sodass keine Bewegung des Schwenkarms aus der Halteposition entgegen der Schwenkrichtung möglich ist.

Es ist aber auch möglich, dass der Steg in der Halteposition zumindest abschnittsweise gebogen ist, sodass eine geringe Bewegung des Schwenkarms aus der Halteposition heraus möglich ist, wobei aber in jedem Fall ein Verschwenken des Schwenkarms aus dem Aufnahmeraum heraus verhindert ist. Insbesondere kann der Steg mit einem gebogenen Abschnitt an der Leitung anliegen, sodass die Leitung durch den Steg zusätzlich gestützt wird. Zudem kann durch die eingeschobene Leitung eine Vorspannen des Steges erfolgen, sodass dieser auf Zug belastet ist und ein Verschwenken des Schwenkarms aus dem Aufnahmeraum heraus verhindert wird.

Im Rahmen können zusätzliche Abstützlasche vorgesehen sein, die die Leitung mit einer Federkraft beaufschlagen, sodass die Leitung federnd im Rahmen gelagert ist. Zudem können diese Abstützlaschen als Toleranzausgleich bei verschieden großen Leitungen dienen.

Weitere Vorteile und Merkmale ergeben sich aus der nachfolgenden Beschreibung in Verbindung mit den beigefügten Zeichnungen. In diesen zeigen:
- Figuren 1 a und 1 b ein Befestigungsclip aus dem Stand der Technik,
- Figur 2 einen erfindungsgemäßen Befestigungsclip,
- Figur 3 den Befestigungsclip aus Figur 2 mit einer im Befestigungsclip gehaltenen Leitung,
- Figur 4 eine zweite Ausführungsform eines erfindungsgemäßen Befestigungsclips während der Montage einer Leitung,
- Figur 5 den Befestigungsclip aus Figur 4 mit einer Leitung, die einen größeren Durchmesser aufweist,
- Figur 6 eine dritte Ausführungsform eines erfindungsgemäßen Befestigungsclips,
- Figur 7 eine vierte Ausführungsform eines erfindungsgemäßen Befestigungsclips,
- Figur 8 eine Detailansicht des Befestigungsclips aus Figur 7, in der sich die Schwenkarme in einer Montageposition befinden, und
- Figur 9 eine Detailansicht des Befestigungsclips aus Figur 7, in der sich die Schwenkarme in einer Halteposition befinden.

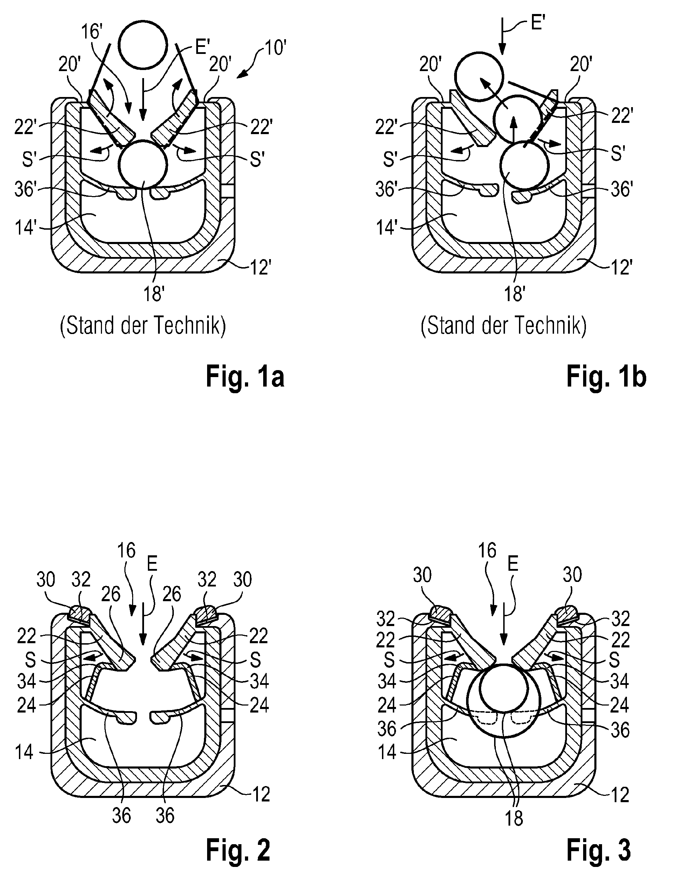

In den Figuren 1a und 1b ist ein Befestigungsclip 10' aus dem Stand der Technik dargestellt. Der Befestigungsclip hat einen Rahmen 12', der in der hier gezeigten Ausführungsform im Wesentlichen quadratisch ausgebildet ist und einen Aufnahmeraum 14' begrenzt.

Der Rahmen 12' weist in Umfangsrichtung U eine Unterbrechung auf, die eine Einschuböffnung 16' bildet, durch die eine Leitung 18' in den Aufnahmeraum 14' eingeschoben werden kann. An den Rändern 20' der Aufnahmeöffnung 16' ist jeweils ein Schwenkarm 22' vorgesehen, der aus der hier gezeigten Halteposition in einer Schwenkrichtung S' in den Aufnahmeraum 14' in eine Montageposition bewegt werden kann, in der die Leitung 18' in einer Einschubrichtung E' in den Aufnahmeraum 14' eingeschoben werden kann. Ist die Leitung 18' vollständig eingeschoben, federn die Schwenkarme 22' entgegen der Schwenkrichtung S' zurück in die Halteposition, sodass die Leitung 18' im Aufnahmeraum 14' fixiert ist.

Im Aufnahmeraum 14' sind des Weiteren Abstützlaschen 36' vorgesehen, die an der Leitung 18' anliegen und eine Bewegung der Leitung 18' im Aufnahmeraum 14' verhindern bzw. eine Anpassung des Aufnahmeraums 14' bzw. des Befestigungsclips 10' an verschieden große Leitungen 18' ermöglichen.

Bei hohen Auszugskräften auf die Leitung 18' entgegen der Einschubrichtung E' kann es allerdings vorkommen, dass die Schwenkarme 22' entgegen der Schwenkrichtung S' aus dem Aufnahmeraum 14' herausbewegt werden, also bezüglich Figur 1a nach oben umschlagen, sodass die Leitung 18' nicht im Aufnahmeraum 14' fixiert ist (Figur 1a).

Des Weiteren kann die Leitung 18' seitlich im Aufnahmeraum 14' verschoben werden, sodass bei einer Zugkraft entgegen der Einschubrichtung E' auch ein einzelner Schwenkarm 22' entgegen der Schwenkrichtung S' bewegt werden kann, wodurch eine Fixierung der Leitung 18' nicht gewährleistet ist (Figur 1 b).

Der Aufbau des in Figur 2 gezeigten erfindungsgemäßen Befestigungsclips 10 entspricht im Wesentlichen dem Aufbau des in den Figuren 1a und 1b gezeigten Befestigungsclips, sodass für gleiche Bauteile die gleichen Bezugszeichen verwendet werden. Zusätzlich weist dieser Befestigungsclip 10 aber zwei Stege 24 auf, die sich vom vorderen Ende 26 der Schwenkarme 22 im Aufnahmeraum 14 bis zu den Seitenwänden 28 des Rahmens 12 erstrecken.

Die Stege 24 sind jeweils gelenkig am Rahmen 12 bzw. am Schwenkarm 22 befestigt. Darüber hinaus weist jeder Steg 24 ein Gelenk 34 auf, durch das der Steg 24 in zwei zueinander bewegliche Abschnitte unterteilt ist. In der gezeigten Halteposition sind die Abschnitte der Stege 24 L-förmig zueinander angeordnet.

Des Weiteren ist jeweils am Anschlussbereich 29 der Schwenkarme 22 zum Rahmen 12 ein Vorsprung 30 vorgesehen, der, wie im Folgenden erläutert wird, mit einer am Rahmen 12 angeordneten Anlagefläche 32 zusammenwirken kann.

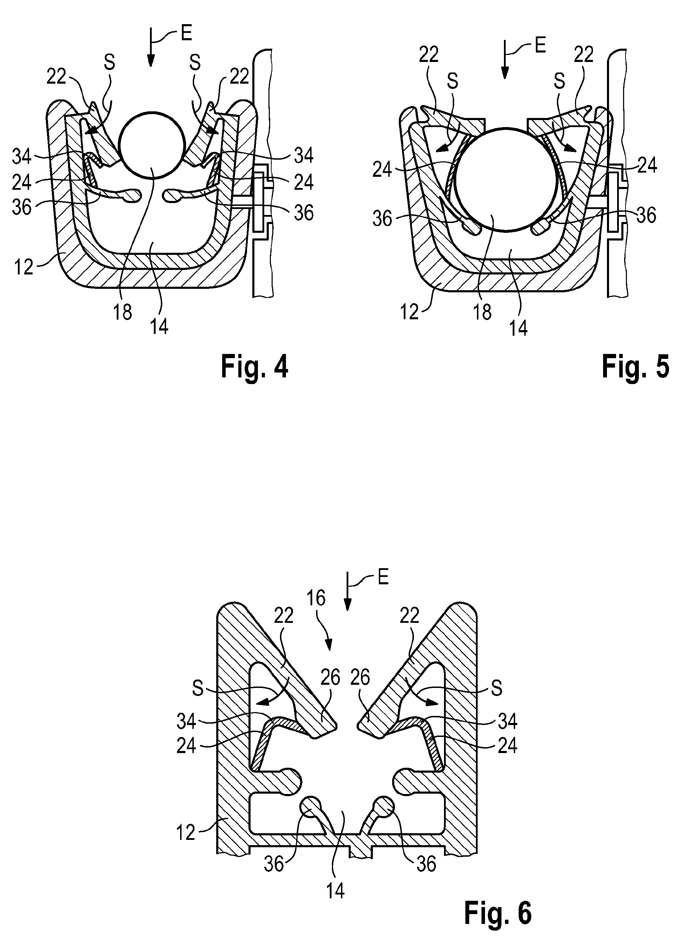

Werden die Schwenkarme 22 beim Einschieben der Leitung 18 aus der Halte-position in die Montageposition verschwenkt, können sich die Stege 24 durch die flexible Befestigung am Schwenkarm 22 bzw. am Rahmen 12 sowie die Gelenke 34 platzsparend zusammenfalten, sodass die Schwenkarme 22 maximal verschwenkt werden können und somit eine möglichst große Einschuböffnung 16 freigeben können (siehe auch Figur 4). Durch die L-Form der Abschnitte der Stege 24 ist ein einfaches Zusammenfalten der Stege 24 gewährleistet.

Ist die Leitung 18 vollständig in den Aufnahmeraum 14 eingeschoben, können die Schwenkarme 22 entgegen der Schwenkrichtungen S zurück in die Halte-position federn, in der die Einschuböffnung 16 im Wesentlichen durch die Schwenkarme 22 verschlossen ist. Das Zurückfedern kann durch die Stege 24 unterstützt werden. In einer bevorzugten Ausführungsform stellen diese Stege 24 aber keine Federfunktion bereit, sodass ein einfaches Verschwenken der Schwenkarme 22 in die Montageposition möglich ist.

Wird die Leitung 18 entgegen der Einschubrichtung E aus dem Aufnahmeraum 14 herausgezogen, werden die Schwenkarme 22 entgegen der Schwenkrichtungen S bewegt, bis die Stege 24 gestreckt ist. Sind die Stege 24 vollständig gestreckt, blockieren diese ein weiteres Verschwenken der Schwenkarme 22 entgegen der Schwenkrichtung S, sodass ein Umschlagen der Schwenkarme 22 entgegen der Schwenkrichtung S aus dem Aufnahmeraum 14 heraus nicht möglich ist. Auf die Leitung 18 kann somit eine wesentlich größere Kraft entgegen der Einschubrichtung E wirken, ohne dass die Fixierung im Befestigungsclip 10 gefährdet ist.

Ein zusätzliches Blockieren der Schwenkarme 22 entgegen der Schwenkrichtung S erfolgt durch die Vorsprünge 30. Werden die Schwenkarme 22 entgegen der Schwenkrichtung S bewegt, gelangen die Vorsprünge 30 mit den Anlageflächen 32 in Anlage. Liegen die Vorsprünge 30 an den Anlageflächen 32 an, blockieren diese ein weiteres Verschwenken der Schwenkarme 22 entgegen der Schwenkrichtung S. Somit ist ein Umschlagen der Schwenkarme 22 aus dem Aufnahmeraum 14 heraus zuverlässig verhindert.

Die in den Figuren 4 und 5 dargestellte Ausführungsform des Befestigungsclips 10 unterscheidet sich von der Ausführungsform gemäß den Figuren 2 und 3 dadurch, dass die Stege 24 nicht am Rahmen 12, sondern an den Abstützlaschen 36 befestigt sind. Des Weiteren sind keine Vorsprünge 30 vorgesehen.

Wie insbesondere in Figur 5 zu sehen ist, sind die Stege 24 in dieser Ausführungsform so ausgebildet, dass diese in der Halteposition der Schwenkarme 22 im Wesentlichen gestreckt sind, aber abschnittsweise bogenförmig verlaufen, wobei die Stege 24 abschnittsweise an der Leitung 18 anliegen und diese zusätzlich im Aufnahmeraum 14 halten bzw. fixieren. Die Leitung 18 wird also durch die Abstützlaschen 36, die Stege 24 sowie die Schwenkarme 22 in Umfangsrichtung fast vollständig gehalten, sodass die Position der Leitung 18 im Aufnahmeraum 14 zuverlässig festgelegt ist.

Da sich die Stege 24 in der hier gezeigten Ausführungsform an der Leitung 18 abstützen, ist eine weitere Streckung der Stege 24, durch die ein Verschwenken der Schwenkarme 22 entgegen der Schwenkrichtung S möglich wäre, nicht möglich, so dass ein Verschwenken der Schwenkarme 22 aus dem Aufnahmeraum 14 heraus verhindert ist.

Die in Figur 6 gezeigte Ausführungsform weist ebenfalls keine Vorsprünge 30 bzw. keine Anlageflächen 32 auf, sondern lediglich Stege 24. Zudem sind die Abstützlaschen 36 nicht an den Seitenwänden 28, sondern am Boden 38 des Rahmens 12 vorgesehen. Die Anzahl und die Position der Abstützlaschen kann allerdings beliebig variiert werden, um eine möglichst gute Fixierung der Leitung 18 im Aufnahmeraum 14 zu gewährleisten.

Darüber hinaus sind auch Ausführungsformen mit lediglich einem Schwenkarm 22 möglich, der an einem der beiden Rändern 20 des Rahmens 12 gehalten ist.

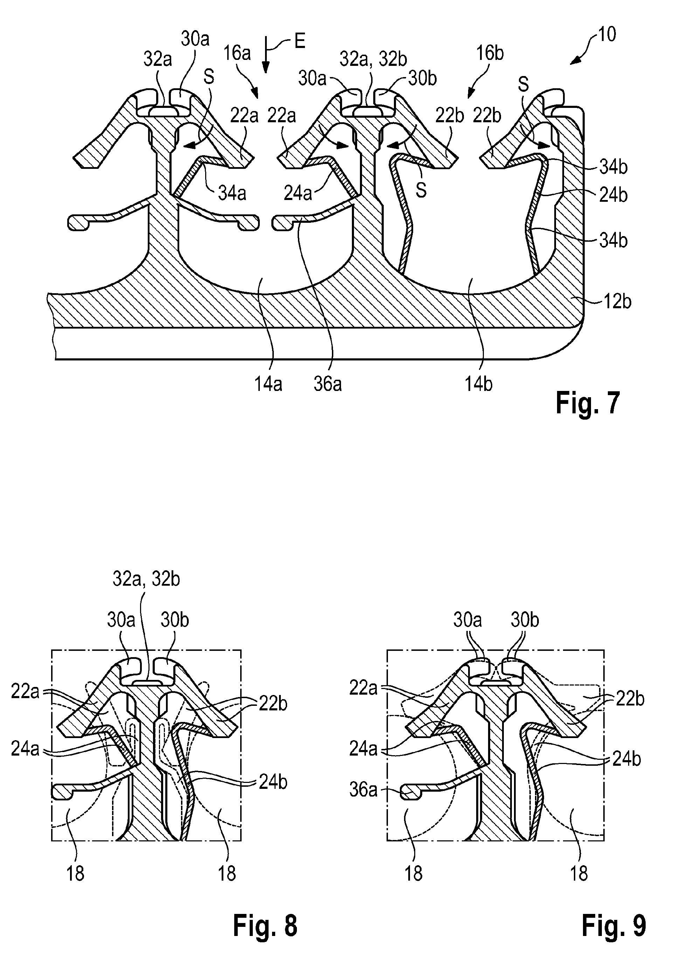

Des Weiteren sind Befestigungsclips 10 mit mehreren Aufnahmeräumen 14 möglich, die nebeneinander angeordnet sind. Eine solche Ausführungsform ist in Figur 7 dargestellt, wobei zwei Aufnahmeräume 14a, 14b vollständig dargestellt sind.

Die Anordnung der Schwenkarme 22a, der Stege 24a, der Vorsprünge 30a sowie der Abstützlaschen 36a entspricht im ersten Aufnahmeraum 14a im Wesentlichen dem Aufbau des Befestigungsclips aus Figur 2.

Im zweiten Aufnahmeraum 14b sind keine zusätzlichen Abstützlaschen vorgesehen. Die Stege 24 weisen hier zwei Gelenke 34 auf und sind am Boden 38 des Rahmens 12 befestigt. Die Leitung 18 wird in diesem Aufnahmeraum 14b in Umfangsrichtung U von den Stegen 24 umschlossen und durch diese im Aufnahmeraum 14b fixiert

In den Figuren 8 und 9 sind die Schwenkarme 22a, 22b in einer Vormontageposition sowie in der Montageposition (gestrichelte Linien) gezeigt, in der diese in Schwenkrichtung S verschwenkt und die Stege 24 zusammengefaltet sind.

In Figur 9 sind die Schwenkarme 22a, 22b in einer Halteposition gezeigt (gestrichelte Linien). Der Steg 24b der zweiten Aufnahme 14b liegt in Umfangsrichtung vollständig an der Leitung 18 an, sodass diese vom Steg 24 im Aufnahmeraum 14b fixiert ist.

## Patentansprüche

1. Befestigungsclip (10) für zumindest eine Leitung (18), mit einem Rahmen (12), der einen Aufnahmeraum (14, 14a, 14b) für die Leitung (18) begrenzt, in den die Leitung (18) so eingebracht werden kann, dass der Rahmen (12) die Leitung (18) in Umfangsrichtung umschließt, wobei am Rahmen (12) eine Einschuböffnung (16, 16a, 16b) für die Leitung (18) vorgesehen ist, und mit zumindest einem am Rahmen (12) gelagerten Schwenkarm (22, 22a, 22b), der von einer Halteposition, in der die Leitung (18) im Aufnahmeraum (14, 14a, 14b) fixiert ist, in einer Schwenkrichtung (S) in eine Montageposition bewegt werden kann, in der die Leitung (18) durch die Einschuböffnung (16, 16a, 16b) in den Aufnahmeraum (14, 14a, 14b) eingebracht werden kann, **dadurch gekennzeichnet, dass** ein Steg (24, 24a, 24b) vorgesehen ist, der mit einem ersten Ende am Schwenkarm (22, 22a, 22b) und mit einem zweiten Ende auf der Innenseite des Rahmens (12) angebracht ist, wobei der Steg (24, 24a, 24b) zumindest ein Gelenk (34, 34a, 34b) aufweist und in der Montageposition gefaltet ist.

2. Befestigungsclip (10) insbesondere nach dem Oberbegriff des Anspruchs 1, **dadurch gekennzeichnet, dass** am Schwenkarm (22, 22a, 22b) und/oder am Rahmen (12) ein Vorsprung (30, 30a, 30b) vorgesehen ist, der bei einem Verschwenken des Schwenkarms (22, 22a, 22b) aus der Halteposition entgegen der Schwenkrichtung (S) des Schwenkarms (22, 22a, 22b) an einer Anlagefläche (32, 32a, 32b) am Rahmen (12) und/oder am Schwenkarm (22, 22a, 22b) in Anlage gelangt und ein Verschwenken des Schwenkarms (22, 22a, 22b) entgegen der Schwenkrichtung (S) blockiert.

3. Befestigungsclip nach Anspruch 1 oder 2, **dadurch gekennzeichnet, dass** der Schwenkarm (22, 22a, 22b) an einem Rand (20, 20a, 20b) der Einschuböffnung (16, 16a, 16b) gelagert ist.

4. Befestigungsclip nach einem der vorhergehenden Ansprüche, **dadurch gekennzeichnet, dass** zwei Schwenkarme (22, 22a, 22b) vorgesehen sind, die an entgegengesetzten Rändern (20, 20a, 20b) der Einschuböffnung (16, 16a, 16b) vorgesehen sind.

5. Befestigungsclip nach einem der vorhergehenden Ansprüche, **dadurch gekennzeichnet, dass** der Steg (24, 24a, 24b) in der Halteposition gestreckt ist.

6. Befestigungsclip nach einem der vorhergehenden Ansprüche, **dadurch gekennzeichnet, dass** der Steg (24, 24a, 24b) in der Halteposition zumindest abschnittsweise gebogen ist und insbesondere an der Leitung (18) anliegt.

7. Befestigungsclip nach einem der vorhergehenden Ansprüche, **dadurch gekennzeichnet, dass** im Rahmen (12) zumindest eine Abstützlasche (36, 36a, 36b) vorgesehen ist, die die Leitung (18) mit einer Federkraft beaufschlagen kann.
